(19) Europäisches Patentamt

European Patent Office

Office européen des brevets

(11) **EP 1 306 920 A2**

(12) **EUROPEAN PATENT APPLICATION**

(43) Date of publication:
**02.05.2003 Bulletin 2003/18**

(51) Int Cl.7: **H01M 8/12**, H01M 8/06,
H01M 8/02

(21) Application number: **02022295.6**

(22) Date of filing: **07.10.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **24.10.2001 JP 2001326473**

(71) Applicant: **NISSAN MOTOR CO., LTD.
Yokohama-shi Kanagawa-ken (JP)**

(72) Inventors:
• **Hara, Naoki
Yokohama-shi, Kanagawa-ken (JP)**
• **Kushibiki, Keiko
Fujisawa-shi, Kanagawa-ken (JP)**
• **Uchiyama, Makoto
Miura-shi, Kanagawa-ken (JP)**
• **Yamanaka, Mitsugu
Yokohama-shi, Kanagawa-ken (JP)**

• **Satou, Fuminori
Yokohama-shi, Kanagawa-ken (JP)**
• **Song, Dong
Yokohama-shi, Kanagawa-ken (JP)**
• **Hishitani, Yoshiko
Yokohama-shi, Kanagawa-ken (JP)**
• **Fukuzawa, Tatsuhiro
Yokosuka-shi, Kanagawa-ken (JP)**
• **Hatano, Masaharu
Yokohama-shi, Kanagawa-ken (JP)**
• **Shibata, Itaru
Kamakura-shi, Kanagawa-ken (JP)**

(74) Representative: **Weber, Joachim, Dr.
Hoefer, Schmitz, Weber & Partner
Patentanwälte
Gabriel-Max-Strasse 29
81545 München (DE)**

(54) **Unit cell for fuel cell and solid oxide fuel cell**

(57) This unit cell for a fuel cell is formed by laminating a fuel electrode (3), a solid electrolyte (2) and an air electrode (1) on a porous base material (4). The porous base material (4) has a plurality of fine pores (5) through which fuel gas can flow and has a reforming catalysis. The unit cells for the fuel cell are coupled and integrated two-dimensionally to make a stack for the fuel cell, and thus a solid oxide fuel cell having this stack as a power generating element is formed.

FIG.2

EP 1 306 920 A2

## Description

## BACKGROUND OF THE INVENTION

### 1. Field of the Invention

The present invention generally relates to a unit cell for a fuel cell, a cell plate for the fuel cell, a stack for the fuel cell and a solid oxide fuel cell, and more particularly, to a unit cell for a fuel cell, which is made by sandwiching a solid electrolyte between electrodes, a cell plate for the fuel cell, a stack for the fuel cell and a solid oxide fuel cell.

### 2. Description of the Related Art

Heretofore, a solid oxide fuel cell (Hereinafter, Solid Oxide Fuel Cell is abbreviated to "SOFC".) has been known, which has a constitution as a power generating element, the constitution sandwiching a solid oxide electrolyte between two electrodes, that is, a fuel electrode (i.e. anode) and an air electrode (i.e. cathode), and which generates power by hydrogen and a hydrocarbon fuel gas such as methane flowing in the fuel electrode and an oxidizing gas such as oxygen and air flowing in the air electrode.

As an SOFC generating the power by use of direct hydrocarbon fuel (Hereinafter, direct HydroCarbon fuel is abbreviated to "HC".), an SOFC having features to be described below has been known. The features are as follows: the anode employs a two-layer structure constituted by a power generation function emphasized layer and an HC reforming function emphasized layer; and an HC reforming emphasized layer having carbon deposition endurance is provided opposing to a current collecting layer, and thus the HC is prevented from being brought into direct contact with the anode opposing to the electrolyte.

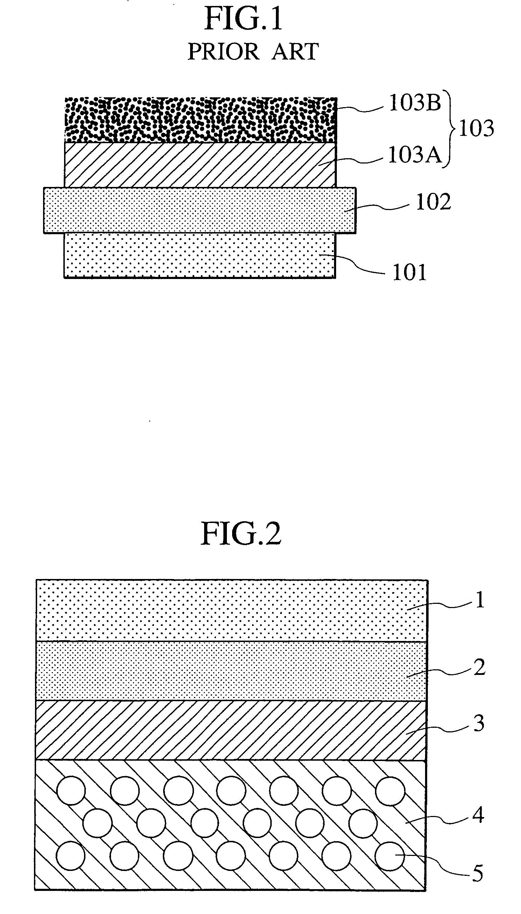

For example, in Japanese Patent Application Laid-Open No. H5-67472, an SOFC having an anode with a two-layer structure is disclosed (see FIG. 1), which is characterized in that the anode (fuel electrode) 103 is formed by a first porous electrode layer 103A and a second porous electrode layer 103B. The first porous electrode layer 103A is composed of Ni- yttria-stabilized zirconia (Hereinafter, Yttria-Stabilized Zirconia is abbreviated to "YSZ".) facing an electrolyte 102. The second porous electrode layer 103B is composed of Ni-spinel structure oxide facing an inter connector (not shown).

Moreover, in Japanese Patent Application Laid-Open No. H9-73913, an SOFC is disclosed, which is formed by providing a NiO-YSZ porous electrode layer opposing to the electrolyte and a $Ni-MgAl_2O_4$ porous electrode layer opposing to the inter connector (not shown).

In the SOFCs described above, carbon disposition in the electrodes facing the electrolyte is restricted, and good power generating characteristics are obtained. Further, when materials having high performance in carbon deposition endurance are only used in the electrodes, an electrically conductive property of the SOFCs is lowered. However, the metal Ni is contained in the electrodes within range of 40 to 70 vol%, so that a current collecting property of the SOFCs is high.

Meanwhile, as a fuel electrode in which the carbon deposition during internal reforming is small, an SOFC using a reforming catalyst with the carbon deposition endurance was disclosed (refer to Applied Catalysis A: General 200 (2000) p. 55-61; the paper's title "Applications of heterogeneous catalysis in the direct oxidation of hydrocarbons in a solid-oxide fuel cell"). This SOFC is excellent in the carbon deposition endurance even at 700°C in comparison with Ni-SDC-YSZ (Here, SDC is Samarium Doped Ceria.) using Ni.

## SUMMARY OF THE INVENTION

However, the SOFC, in which the fuel electrode employs the two-layer structure configured by the power generation function emphasized layer and the HC reforming function emphasized layer, uses the electrolyte as a support member for the unit cell. Therefore, an electrolyte base material cannot be thinned in order to maintain strength of the unit cell, thus resulting in thickening the unit cell. Hence, it has been difficult to manufacture a lightweight and compact stack. The features (i.e., lightweight and compact) are important for an SOFC for a movable body. Moreover, since the porous base material having the reforming function cannot be a gas passage, at stacking, it is necessary to provide the thick unit cell, the gas passage and the current collecting layer for enhancing the current collecting property. Accordingly, it has been difficult to manufacture the lightweight and compact stack. Furthermore, the Ni, which is used in the porous electrode layers and which is provided to take countermeasures on the carbon deposition, is a material having a feature that carbons are apt to be deposited in comparison with Cu or Cu-Zn alloy. Therefore, such Ni has been insufficient to be used for taking countermeasures on the carbon deposition.

Also, the SOFC, which uses the reforming catalyst with the carbon deposition endurance, employs a composite material having both the reforming catalyst and the electrode as the fuel electrode, such that cell power of the SOFC is small and that an electrode reaction has not been sufficiently executed by the fuel electrode constituted by a single layer.

The present invention was created in consideration of the problems as described above, which were inherent in the related art. It is an object of the present invention to provide a unit cell for a fuel cell, a cell plate for the fuel cell, a stack for the fuel cell and an SOFC, in which the carbon deposition is restricted, and which are more compact and lightweight than conventional ones.

As a result of a series of assiduous studies for the purpose of solving the above-described problems, the inventors of the present invention discovered that the above-described problems could be solved by using a porous base material which has a plurality of fine pores as gas passages and which can reform fuel gas by combining a plurality of reforming reactions, and thus the inventors came to complete the present invention.

The first aspect of the present invention provides a unit cell for a fuel cell, comprising: a fuel electrode; an air electrode opposite to the fuel electrode; a solid electrolyte between the fuel electrode and the air electrode; and a porous base material laminated on the fuel electrode, wherein the porous base material comprises a plurality of fine pores through which fuel gas flows and has a catalysis by which the fuel gas is reformed.

## BRIEF DESCRIPTION OF THE DRAWINGS

FIG. 1 is a cross-sectional view showing one example of a conventional unit cell for a fuel cell;
FIG. 2 is a cross-sectional view showing one example of a unit cell for a fuel cell according to the present invention;
FIG. 3 is a schematic view showing a reforming catalyst supported in a porous base material according to the present invention;
FIG. 4 is a schematic view showing one example of a method of introducing air to a reforming layer according to the present invention;
FIG. 5 is a cross-sectional view showing another example of the unit cell for the fuel cell according to the present invention; and
FIG. 6 is a schematic view showing one example of an SOFC according to the present invention.

## DETAILED DESCRIPTION OF THE PREFERRED EMBODIMENTS

Hereinafter, in order to describe a unit cell for a fuel cell and an SOFC of the present invention more in detail, preferred embodiments of this invention will be explained with reference to the accompanying drawings below.

In this specification, a unit mark "%" denotes a mass percentage unless otherwise specified.

For the sake of descriptive convenience, one face of a base material or an electrode is described as a "surface" or an "upper surface," and the other face is described as a "back surface" or a "lower surface". However, needless to say, these are elements equivalent to each other, and a constitution in which these faces are mutually substituted is included in the scope of the present invention. Furthermore, a cell plate is a practical product mode for accelerating integration of unit cells to achieve high power of an obtained fuel cell.

As shown in FIG. 2, a unit cell for a fuel cell according to the present invention is formed in such a manner that a fuel electrode 3, a solid electrolyte 2 (That is, the solid electrolyte is made of a solid oxide.) and an air electrode 1 are laminated in this order, and on an upper surface and/or a lower surface of a laminated body thus obtained, a porous base material 4 is laminated.

The porous base material 4 includes a plurality of fine pores 5 through which fuel gas can flow. Thus, gas passages can be formed in the same base material as the porous base material 4 having a reforming catalyst portion and a current collecting portion, so that both miniaturization and weight reduction of the unit cell can be achieved. Desirably, a diameter of the fine pore 5 in the porous base material 4 is set approximately within range of 10 to 1000 $\mu m$, and a porosity of the porous base material 4 is equal to/more than 60%. Moreover, it is desirable that a thickness of the porous base material 4 is set approximately within range of 100 to 2000 $\mu m$.

The porous base material 4 has a catalysis that the fuel gas is reformed to hydrogen enriched gas which easily reacts with oxygen in the fuel cell. Thus, an internal reforming portion for converting the fuel gas into hydrogen can be used together with the gas passage, thereby a constituent unit of a compact and lightweight SOFC as compared with the conventional internal reforming type SOFC is formed. Further, the fuel electrode is formed only by pure electrode materials, whereby overvoltage of the fuel electrode can be designed to be low. Therefore, a cell performance in this case is more excellent than the case where the fuel electrode is formed by a composite material having the electrode and the reforming catalyst.

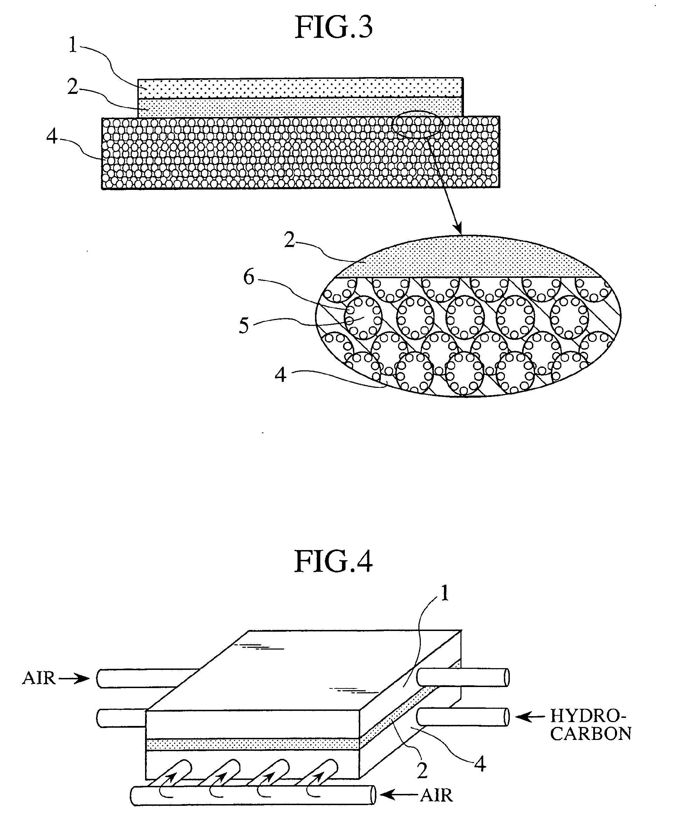

With regard to the above-described reforming catalysis, a steam-reforming catalyst, a directly dissolving catalyst or a partially oxidizing catalyst and a reforming catalyst according to an arbitrary combination of the forgoing catalysts can be supported in, painted on or covered by the porous base material 4. Concretely, as shown in FIG. 3, a reforming catalyst 6 can be supported in the fine pore 5 included in the porous base material 4.

The steam-reforming catalyst accelerates an endothermic chemical reaction represented in the following reaction formula:

$$C_nH_{2n+2} + 2nH_2O \rightarrow nCO_2 + (3n + 1)H_2$$

For example, copper (Cu), copper-zinc (Cu-Zn) and the like are used as the steam-reforming catalyst. Moreover, the carbon deposition is small in this reaction.

The directly dissolving catalyst accelerates an exothermic chemical reaction represented in the following reaction formula:

$$C_nH_{2n+2} \rightarrow nC + (n + 1)H_2$$

For example, platinum (Pt), ruthenium (Ru), rhodium (Rh) and the like are used as the directly dissolving catalyst. Note that the carbon deposition is large in this reaction.

The oxidizing catalyst accelerates an exothermic chemical reaction represented in the following reaction formula:

$$C_nH_{2n+2} + nO_2 \rightarrow nCO_2 + (n + 1)H_2$$

Here, a catalyst similar to the directly dissolving catalyst can be used. Note that the oxygen is essential in this reaction. However, as shown in FIG. 4, the oxygen can be introduced to the unit cell by use of a method of directly introducing air to the fuel electrode 3 in a pulse mode.

By using exothermic and endothermic characteristics of the reforming reactions described above, heat management of the unit cell can be conducted.

For example, as the porous base material 4, a porous material can be used, in which the steam-reforming catalyst, the directly dissolving catalyst and the partially oxidizing catalyst are dispersed homogeneously. In this case, it is possible to prevent exothermic heat of the unit cell due to the exothermic characteristics of the directly dissolving reaction and the oxidizing reaction by means of the endothermic characteristics of the steam-reforming reaction.

The porous base material 4 can be used, in which the steam-reforming catalyst is dispersed upstream of both the directly dissolving catalyst and the oxidizing catalyst with respect to a flowing direction of the gas. In this case, hydrocarbons are first converted into the hydrogen or light hydrocarbons by the steam reforming in the upstream, thereby an influence of the carbon deposition to both the directly dissolving catalyst and the partially oxidizing catalyst can be reduced. Accordingly, both the prevention of cell power lowering and the lifetime elongation of the catalyst materials can be achieved.

The directly dissolving catalyst can also be dispersed in the vicinity of the fuel electrode, and the steam-reforming catalyst can be dispersed in other portions.

The directly dissolving catalyst and the partially oxidizing catalyst can be dispersed on an outer circumferential portion (i.e., the outer circumferential portion is the surface.) of the porous base material 4. The outer circumferential portion of the porous base material 4 is easier to cool than an internal portion thereof. Therefore, the catalyst accelerating the exothermic heat is dispersed on the outer circumferential portion, whereby difference between temperature of the internal portion and temperature of the outer circumferential portion can be homogenized.

It is preferred that the porous base material 4 is an electric conductor or a ceramics.

The electric conductor includes a metal, an alloy or an arbitrary combination of the metal and the alloy selected from following group. The group is consisted of copper (Cu), copper-zinc (Cu-Zr), palladium (Pd), palladium-zinc (Pd-Zn), platinum (Pt), ruthenium (Ru), rhodium (Rh), nickel (Ni), nickel-chromium (Ni-Cr), nickel-chromium-iron (Ni-Cr-Fe), nickel-chromium-tungsten-molybdenum (Ni-Cr-W-Mo), nickel-cobalt (Ni-Co), nickel-copper (Ni-Cu), silver (Ag), silver-palladium (Ag-Pd), silver-platinum (Ag-Pt), iron-chromium-nickel (Fe-Cr-Ni) and iron-chromium-aluminum (Fe-Cr-Al). Particularly, Cu or Cu-Zn is a good steam-reforming catalyst, and is suitable since the effect of restricting the carbon deposition is obtained. Moreover, each electric conductor is expanded or formed into a felt, a mesh or the like, and thus making it possible to impart desired fine pores to the electric conductor. In this case, the porous base material 4 itself functions as both the reforming catalyst and the electric conductor, so that gas passages having the reforming function and the current collecting function at the same time can be formed. Therefore, the compact and lightweight unit cell as compared with the conventional internal reforming type fuel cell is obtained.

Meanwhile, the ceramics can be selected from alumina, ceria, zirconia, silica, titania, magnesia, zinc oxide, gallium oxide, indium oxide and an arbitrary combination thereof. The reforming catalyst can be supported in, painted on or covered with these materials, such that gas passages having the reforming function can be formed. When the SOFC is formed by using these materials, the SOFC can be miniaturized and reduced in weight as compared with the conventional internal reforming type SOFC.

It is preferred that an electrically conductive material is included in the ceramics, whereby the cell power can be collected by the electrically conductive material.

The surface of the ceramics can also be covered with the electric conductor such as Cu and Cu-Zn. An outer wall of the porous base material 4 (that is, the porous base material functions as a gas passage.) functions as the electric conductor, and thus the current collecting function is obtained by the outer wall.

With metal materials and ceramics other than the above-described ones, in some cases, sufficient endurance is not obtained for a reduction atmosphere created by the fuel gas. Note that, as the fuel gas, a hydrocarbon gas such as methanol, a natural gas and a gasoline can be used.

The fuel electrode 3 of the unit cell of the present invention can be made as a laminated body by laminating a plurality of fuel electrode layers. For example, in the case of the unit cell of a fuel electrode supporting type, the unit cell uses a ceramics thin plate for the fuel electrode, a fuel electrode paste is used for joining a fuel electrode base material and the porous base material having the reforming catalyst.

As a material constituting the fuel electrode 3, the one selected from nickel, nickel cermet and platinum can be used.

A material constituting the solid electrolyte 2 is not particularly limited. A conventionally known material having oxygen ion conductivity is usable. For example, the material is as follows: (a) stabilized zirconia in which neodymium oxide ($Nd_2O_3$), samarium oxide ($Sm_2O_3$), yttria ($Y_2O_3$), scandium oxide ($Sc_2O_3$), gadolinium oxide ($Gd_2O_3$) or the like is dissolved; (b) a solid solution containing ceria ($CeO_2$); (c) a solid solution of bismuth oxide; and (d) oxide of perovskite structure containing lanthanum (La) and gallium (Ga).

As a material constituting the air electrode 1, oxide of perovskite structure such as $La_{1-x}Sr_xMnO_3$ and $La_{1-x}Sr_xCoO_3$ can be used.

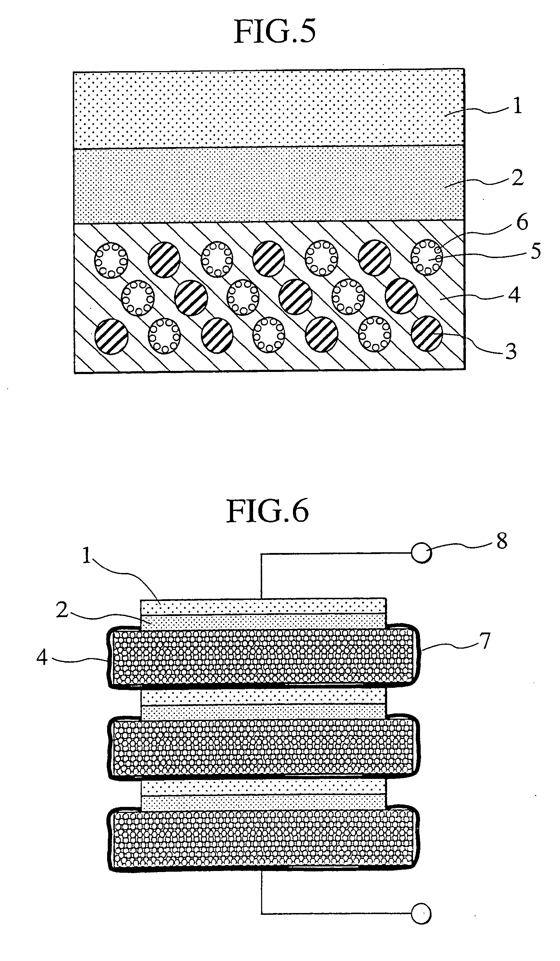

In the above-described unit cell, the material of the fuel electrode 3 can also be contained in the porous base material 4. Concretely, as shown in FIG. 5, on the porous base material 4 in which the fuel electrode material 3 and the reforming catalyst 6 are supported, the solid electrolyte 2 and the air electrode 1 are laminated in this order, and thus the unit cell is configured.

The cell plate for the fuel cell according to the present invention is made by joining a plurality of the above-described unit cells two-dimensionally and continuously in a direction approximately perpendicular to a laminating direction of the air electrode 1, the fuel electrode 3 and the solid electrolyte 2. The balance between the electric resistance and the output electric power can be adjusted by appropriately changing the number of unit cells assumed by the electrically conductive material. Needless to say, the cell plate may be formed by combining and joining the above-described types of unit cells as shown in FIGS. 2 to 5.

Description will be made for the stack for the fuel cell according to the present invention.

The stack for the fuel cell is made by coupling and integrating a plurality of above-described unit cells or cell plates for the fuel cell two-dimensionally in approximately the same direction as the laminating direction of the air electrode, the fuel electrode and the solid electrolyte. In the stack thus made, the cells can be manufactured to be lightweight and compact as compared with those in the stack manufactured by use of the conventional art. Therefore, it is possible to manufacture the stack according to the present invention to be lightweight and compact as compared with the conventional one. From the above, a stack suitable as a stack for a movable body or transportation can be obtained.

Description will be made for the SOFC according to the present invention.

The SOFC is obtained by constituting the above-described stack for the fuel cell as the power generating element. Thus, the porous base material 4 can be utilized as the gas passage and the inter connector (i.e., an electricity conducting passage), and thin filming and miniaturization of the fuel cell are facilitated. For example, as shown in FIG. 6, the SOFC can be formed by including porous base materials 4, electric power sorting terminals 8 and so on. Each of porous base materials 4 contains the fuel electrode material, has the fuel gas reforming function and is covered with an electric conductor 7 that serves as a gas non-pass membrane.

**(Examples)**

Hereinafter, the present invention is described in more detail by examples. However, this invention is not limited by these examples.

**(First Example)**

(a) Porous base material

Cu-made porous metal (50 mm $\times$ 50 mm $\times$ 2 mm) obtained by pressing and hardening Cu fibers was prepared.

(b) Fuel electrode material

Samarium doped ceria $(CeO_2)_{0.8}(Sm_2O_3)_{0.2}$ (Hereinafter, Samarium Doped Ceria is abbreviated to "SDC".) powder having a mean diameter of particles ranging from 0.5 to 1 µm and NiO powder having a mean diameter of particles ranging from 1 to 2 µm were mixed in a weight ratio of 5: 5. Then, a solvent and a binder were added to the obtained mixture. Thus, a green sheet (50 mm $\times$ 50 mm $\times$ 0.5 mm) was manufactured.

(c) Solid electrolyte material

SDC powder having a mean diameter of particles ranging from 0.5 to 1 µm was added to a solvent and a binder, and thus a green sheet (50 mm $\times$ 50 mm $\times$ 0.2 mm) was manufactured.

(d) Air electrode material

$(La_{0.7}Sr_{0.3})CoO_{3-d}$ (hereinafter referred to as "LSC") powder having a mean diameter of particles ranging from 1 to 3 µm was added to a solvent and a binder, and thus a paste was manufactured.

(e) Manufacturing sequence of unit cell

The NiO-SDC sheet was laid on the porous body of Cu, and further, the SDC sheet was laid on the NiO-SDC sheet. This SDC sheet face was pressurized at 100 g/cm$^2$, whereby adhesiveness among the NiO-SDC sheet, the porous metal and the SDC sheet was enhanced.

The porous metal on which such two sheets were laid was subjected to a dry treatment and a debinder treatment in the atmosphere at 500°C. Subsequently, the temperature was elevated from 500°C to 1400°C in a flow of $N_2$, and the sheets of the fuel electrode and the electrolyte were sintered together with the porous metal. In this case, in order to prevent oxidation of the porous metal, sintering was conducted in the nitrogen atmosphere.

The LSC paste was printed on the SDC face by use of the screen printing process. Then, the LSC (air electrode), the SDC (solid electrolyte), the NiO- SDC (fuel electrode) and the Cu-made porous metal (porous base material) were sintered in the atmosphere at 1100°C, thus obtaining a unit cell.

**(Second Example)**

(a) Porous base material

Expandable metal made of a Cu-Zn alloy (50 mm × 50 mm × 2 mm) was prepared. In this expandable metal, a mean diameter of pores was 200 μm and a porosity was 95%. Moreover, a Pt paste serving as a supporting material (i.e., a reforming catalyst) was diluted by turpentine oil.

(b) Fuel electrode material

Powder was obtained by mixing SDC powder having a mean diameter of particles ranging from 0.5 to 1 μm with NiO powder having a mean diameter of particles ranging from 1 to 2 μm in a weight ratio of 5: 5. Then, the powder was added to a solvent and a binder, and thus a green sheet (50 mm × 50 mm × 0.5 mm) was manufactured.

(c) Solid electrolyte material

SDC powder having a mean diameter of particles ranging from 0.5 to 1 μm was added to a solvent and a binder, and thus a green sheet (50 mm × 50 mm × 0.2 mm) was manufactured.

(d) Air electrode material

LSC powder having a mean diameter of particles ranging from 1 to 3 μm was added to a solvent and a binder, and thus a paste was manufactured.

(e) Manufacturing sequence of unit cell

The expandable metal was immersed in the Pt paste diluted by the turpentine oil to be impregnated with Pt. Thereafter, the Pt-impregnated expandable metal was subjected to a dry treatment and a debinder treatment in the atmosphere at 800°C. Hence, a porous metal was manufactured so as to include the reforming catalyst Pt in the expandable metal Cu-Zn alloy. On the porous metal having Pt, the NiO-SDC sheet was laid, and further, on the NiO-SDC sheet, the SDC sheet was laid. This SDC sheet face was pressurized at 100 g/cm$^2$,

whereby adhesiveness among the NiO-SDC sheet, the porous metal and the SDC sheet was enhanced.

The porous metal on which such two sheets were laid was subjected to the dry treatment and the debinder treatment in the atmosphere at 500°C. Subsequently, the temperature was elevated from 500°C to 1400°C in a flow of $N_2$, and the sheets of the fuel electrode and the electrolyte were sintered together with the porous metal. In this case, in order to prevent oxidation of the porous metal, sintering was conducted in the nitrogen atmosphere.

The LSC paste was printed on the SDC face by use of the screen printing process. Then, the LSC (air electrode), the SDC (solid electrolyte), the NiO- SDC (fuel electrode) and Cu-Zn and Pt porous metal (porous base material) were sintered in the atmosphere at 1100°C, thus obtaining a unit cell.

**(Third Example)**

(a) Porous base material

Ni-felt metal (50 mm × 50 mm × 0.2 mm) was prepared. This porous base material was subjected to Cu plating.

(b) Fuel electrode material

Powder was obtained by mixing 8 mol% yttria-stabilized zirconia (hereinafter referred to as "8YSZ") having a mean diameter of particles ranging from 0.3 to 1 μm with NiO powder having a mean diameter of particles ranging from 1 to 2 μm in a weight ratio of 4: 6. Then, the powder was added to a solvent and a binder, and thus a green sheet (48 mm × 48 mm × 0.5 mm) was manufactured.

(c) Solid electrolyte material

8YSZ powder having a mean diameter of particles ranging from 0.3 to 1 μm was added to a solvent and a binder, and thus a green sheet (50 mm × 50 mm × 0.2 mm) was manufactured.

(d) Air electrode material

$(La_{0.7}Sr_{0.3})MnO_{3-d}$ powder (hereinafter referred to as "LSM") having a mean diameter of particles ranging from 1 to 3 μm was added to a solvent and a binder, and thus a green sheet (45 mm × 45 mm × 0.5 mm) was manufactured.

(e) Manufacturing sequence of unit cell

Approximately five plates of the Ni felt were laminated to manufacture a porous metal body having a thickness of approximately 1 mm, and then the porous metal body was subjected to Cu plating.

On the porous metal body subjected to the Cu plating, the NiO-8YSZ sheet was laid, and then the 8YSZ sheet and the LSM sheet were sequentially laid thereon. The LSM sheet face was pressurized at 100 g/cm$^2$, whereby adhesiveness among the NiO-8YSZ sheet, the porous metal, the 8YSZ sheet and the LSM sheet was enhanced.

The porous metal body on which such three sheets were laid was subjected to a dry treatment and a debinder treatment in the atmosphere at 500°C. Subsequently, the temperature was elevated from 500°C to 1400°C in a flow of $N_2$, and the sheets of the fuel electrode NiO-8YSZ, the electrolyte 8YSZ and the air electrode LSM were sintered together with the porous metal body Cu-plating Ni felt, thereby obtaining a unit cell.

**(Fourth Example)**

(a) Porous base material

Ni-felt metal (50 mm × 50 mm × 0.2 mm) was prepared. A Pt paste serving as a support material (i.e., a reforming catalyst) was diluted by turpentine oil.

(b) Fuel electrode material

Powder was obtained by mixing SDC having a mean diameter of particles ranging from 0.5 to 1 μm with NiO powder having a mean diameter of particles ranging from 1 to 2 μm in a weight ratio of 5: 5. Then, the powder was added to a solvent and a binder, and thus a green sheet (50 mm × 50 mm × 0.5 mm) was manufactured.

(c) Solid electrolyte material

SDC powder having a mean diameter of particles ranging from 0.5 to 1 μm was added to a solvent and a binder, and thus a green sheet (50 mm × 50 mm × 0.2 mm) was manufactured.

(d) Air electrode material

$(Sm_{0.5}Sr_{0.5})CoO_{3-d}$ powder (hereinafter referred to as "SSC") having a mean diameter of particles ranging from 1 to 3 μm was added to a solvent and a binder, and thus a paste was manufactured.

(e) Manufacturing sequence of unit cell

Approximately five plates of the Ni felt were laminated to manufacture a porous metal body having a thickness of approximately 1 mm. The porous metal body was immersed in the Pt paste diluted by the turpentine oil to be impregnated with Pt. Thereafter, the Pt-impregnated porous metal body was subjected to a dry treatment and a debinder treatment in the atmosphere at 800°C.

On the porous metal body having the reforming catalyst Pt, the NiO-SDC sheet was laid, and further, on the NiO-SDC sheet, the SDC sheet was laid. This SDC sheet face was pressurized at 100 g/cm$^2$, whereby adhesiveness among the NiO-SDC sheet, the porous metal body and the SDC sheet was enhanced.

The porous metal body on which such two sheets were laid was subjected to the dry treatment and the debinder treatment in the atmosphere at 500°C. Subsequently, the temperature was elevated from 500°C to 1400°C in a flow of $N_2$, and the sheets of the fuel electrode and the electrolyte were sintered together with the porous metal body. In this case, in order to prevent oxidation of the porous metal, sintering was conducted in the nitrogen atmosphere.

The SSC paste was printed on the SDC face by use of the screen printing process. Then, the SSC (air electrode), the SDC (solid electrolyte), the NiO- SDC (fuel electrode) and the Ni-felt and Pt porous metal body (porous base material) were sintered in the atmosphere at 1000°C, such that a unit cell was obtained.

**(Fifth Example)**

(a) Porous base material

Inconel expandable metal (50 mm × 50 mm × 2 mm) was prepared. In this expandable metal, a mean diameter of pores was 200 μm, and a porosity was 95%. Moreover, the Inconel expandable metal was subjected to Cu plating.

(b) Fuel electrode material

Powder was obtained by mixing 8YSZ having a mean diameter of particles ranging from 0.3 to 1 μm with NiO having a mean diameter of particles ranging from 1 to 2 μm in a weight ratio of 4: 6. Then, the powder was added to a solvent and a binder, and thus a green sheet (48 mm × 48 mm × 0.5 mm) was manufactured.

(c) Solid electrolyte material

8YSZ powder having a mean diameter of particles ranging from 0.3 to 1 μm was added to a solvent and a binder, and thus a green sheet (50 mm × 50 mm × 0.2 mm) was manufactured.

(d) Air electrode material

LSM powder having a mean diameter of particles ranging from 1 to 3 μm was added to a solvent and a binder, and thus a green sheet (45 mm × 45 mm × 0.5 mm) was manufactured.

(e) Manufacturing sequence of unit cell

The expandable metal was subjected to Cu plating. Cu-plating expandable metal Inconel is called a porous metal. On the porous metal, the NiO-8YSZ sheet was laid. Furthermore, on the NiO-8YSZ sheet, the 8YSZ sheet was laid, and on the 8YSZ sheet, the LSM sheet was laid. This LSM sheet face was pressurized at 100 g/cm$^2$, whereby adhesiveness among the NiO-8YSZ sheet, the porous metal, the 8YSZ sheet and the LSM sheet was enhanced.

The porous metal on which such three sheets were laid was subjected to the dry treatment and the debinder treatment in the atmosphere at 500°C. Subsequently, the temperature was elevated from 500°C to 1400°C in a flow of N$_2$, and the sheets of the fuel electrode NiO-8YSZ, the electrolyte 8YSZ and the air electrode LSM were sintered together with the porous metal Cu-plating Inconel, thereby obtaining a unit cell.

**(Sixth Example)**

(a) Porous base material

Inconel expandable metal (50 mm × 50 mm × 2 mm) was prepared. In this expandable metal, a mean diameter of pores was 200 μm, and a porosity was 95%. Moreover, a Ru paste serving as a supporting material (i.e., a reforming catalyst) was diluted by turpentine oil.

(b) Fuel electrode material

Powder was obtained by mixing 8YSZ having a mean diameter of particles ranging from 0.3 to 1 μm with NiO having a mean diameter of particles ranging from 1 to 2 μm in a weight ratio of 4: 6. Then, the powder was added to a solvent and a binder, and thus a green sheet (48 mm × 48 mm × 0.5 mm) was manufactured.

(c) Solid electrolyte material

8YSZ powder having a mean diameter of particles ranging from 0.3 to 1 μm was added to a solvent and a binder, and thus a green sheet (50 mm × 50 mm × 0.2 mm) was manufactured.

(d) Air electrode material

LSM powder having a mean diameter of particles ranging from 1 to 3 μm was added to a solvent and a binder, and thus a green sheet (45 mm × 45 mm × 0.5 mm) was manufactured.

(e) Manufacturing sequence of unit cell

The expandable metal was immersed in the Ru paste diluted by the turpentine oil to be impregnated with Ru. Subsequently, the Ru-impregnated expandable metal was subjected to a dry treatment and a debinder treatment in the atmosphere at 800°C. Hence, a porous metal was manufactured so as to include the reforming catalyst Ru in the expandable metal Inconel. On the porous metal having Ru, the NiO-8YSZ sheet was laid. Furthermore, on the NiO-8YSZ sheet, the 8YSZ sheet was laid, and on the 8YSZ sheet, the LSM sheet was laid. This LSM sheet face was pressurized at 100 g/cm$^2$, whereby adhesiveness among the NiO-8YSZ sheet, the porous metal, the 8YSZ sheet and the LSM sheet was enhanced.

The porous metal on which such three sheets were laid was subjected to the dry treatment and the debinder treatment in the atmosphere at 500°C. Subsequently, the temperature was elevated from 500°C to 1400°C in a flow of N$_2$, and the sheets of the fuel electrode NiO-8YSZ, the electrolyte 8YSZ and the air electrode LSM were sintered together with the porous metal Inconel and Ru, whereby a unit cell was obtained.

**(Seventh Example)**

(a) Porous base material

A porous body (50 mm × 50 mm × 2 mm) of 3 mol% yttria-stabilized zirconia (hereinafter referred to as "3YSZ"), in which a coefficient of thermal expansion was approximate to that of 8YSZ constituting an electrolyte, and strength was also sufficient, was prepared. The porous body was subjected to Cu plating.

(b) Fuel electrode material

Powder was obtained by mixing 8YSZ having a mean diameter of particles ranging from 0.3 to 1 μm with NiO having a mean diameter of particles ranging from 1 to 2 μm in a weight ratio of 4: 6. Then, the powder was added to a solvent and a binder, and thus a green sheet (48 mm × 48 mm × 0.5 mm) was manufactured.

(c) Solid electrolyte material

8YSZ powder having a mean diameter of particles ranging from 0.3 to 1 μm was added to a solvent and a binder, and thus a green sheet (50 mm × 50 mm × 0.2 mm) was manufactured.

(d) Air electrode material

A sputter target area made of LSC was prepared, and was formed into a film by heating.

(e) Manufacturing sequence of unit cell

The 8YSZ green sheet constituting the solid electrolyte was sintered in the atmosphere at 1400°C, whereby an 8YSZ sheet having a thickness of approximately 150 μm was obtained.

On the porous 3YSZ base material subjected to the Cu plating, the NiO-8YSZ sheet constituting a fuel electrode was laid. Subsequently, the 8YSZ sheet constituting the solid electrolyte was laid on the NiO-8YSZ sheet. This 8YSZ sheet face was pressurized at 100 g/cm$^2$, whereby adhesiveness among the NiO-8YSZ sheet, the 8YSZ sheet and the porous 3YSZ base material was enhanced.

On the 8YSZ sheet, the porous ceramics on which such two sheets were laid was laid, and was subjected to a dry treatment and a debinder treatment in the atmosphere at 500°C. Subsequently, the temperature was elevated from 500°C to 1400°C in a flow of N$_2$, and the sheets of the fuel electrode NiO-8YSZ and the electrolyte 8YSZ were sintered together with the porous base material Cu-plating 3YSZ. On one face of the obtained 8YSZ sheet having an area of 50 mm × 50 mm, a film-generating area having an area of 45 mm × 45 mm was provided. An LSC film (the air electrode) was generated by heating at approximately 800°C by using a RF sputter. In this case, a film thickness of the LSC was approximately 0.5 μm.

**(Eighth Example)**

(a) Porous base material

A porous body (50 mm × 50 mm × 2 mm) of 3YSZ, in which a coefficient of thermal expansion was approximate to that of 8YSZ constituting an electrolyte, and strength was also sufficient, was prepared. The porous body was subjected to electroless Ni plating. Moreover, Pd powder was dispersed in a base of the electroless plating, thereby the porous body was made to function as a reforming catalyst effectively.

(b) Fuel electrode material

Powder was obtained by mixing 8YSZ having a mean diameter of particles ranging from 0.3 to 1 μm with NiO having a mean diameter of particles ranging from 1 to 2 μm in a weight ratio of 4: 6. Then, the powder was added to a solvent and a binder, and thus a green sheet (48 mm × 48 mm × 0.5 mm) was manufactured.

(c) Solid electrolyte material

8YSZ powder having a mean diameter of particles ranging from 0.3 to 1 μm was added to a solvent and a binder, and thus a green sheet (50 mm × 50 mm × 0.2 mm) was manufactured.

(d) Air electrode material

LSM powder having a mean diameter of particles ranging from 0.3 to 1 μm was added to a solvent and a binder, and thus a green sheet (45 mm × 45 mm × 0.5 mm) was manufactured.

(e) Manufacturing sequence of unit cell

The porous body 3YSZ was subjected to the electroless Ni plating. On the porous body subjected to the electroless Ni plating, the NiO-8YSZ sheet constituting a fuel electrode was laid. Furthermore, on the NiO-8YSZ sheet, the 8YSZ sheet constituting a solid electrolyte and the LSM sheet constituting an air electrode was laid in this order. This LSM sheet face was pressurized at 100 g/cm$^2$, whereby adhesiveness among the NiO-8YSZ sheet, the porous metal, the 8YSZ sheet and the LSM sheet was enhanced.

The porous body 3YSZ on which such three sheets were laid was subjected to a dry treatment and a debinder treatment in the atmosphere at 500°C. Subsequently, the temperature was elevated from 500°C to 1400°C in a flow of N$_2$, and the sheets of the fuel electrode NiO-8YSZ, the electrolyte 8YSZ and the air electrode LSM were sintered together with the porous body 3YSZ that is subjected to the electroless Ni plating that includes the reforming catalyst Pt, thereby obtaining a unit cell.

**(Ninth Example)**

(a) Porous base material

Inconel expandable metal (50 mm × 50 mm × 2 mm) was prepared. In this expandable metal, a mean diameter of pores was 200 μm, and a porosity was 95%. Moreover, a supporting catalyst employed metal oxide powder having a mean diameter of particles ranging from 1 to 3 μm and containing Cu-Zn and Pd-Zn. Slurry was prepared so as to include the supporting catalyst, a solvent and a binder. Since the slurry thus prepared was impregnated into the expandable metal Inconel, viscosity of the slurry of was set at 100 P (P is poise).

(b) Fuel electrode material

Powder was obtained by mixing 8YSZ having a mean diameter of particles ranging from 0.3 to 1 μm with NiO having a mean diameter of particles ranging from 1 to 2 μm in a weight ratio of 4: 6. Then, the powder was added to a solvent and a binder, and thus a green sheet (48 mm × 48 mm × 0.5 mm) was manufactured.

(c) Solid electrolyte material

8YSZ powder having a mean diameter of particles ranging from 0.3 to 1 μm was added to a solvent and a binder, and thus a green sheet (50 mm × 50 mm × 0.2 mm) was manufactured.

(d) Air electrode material

LSM powder having a mean diameter of particles ranging from 1 to 3 μm was added to a solvent and a binder, and thus a green sheet (45 mm × 45 mm × 0.5 mm) was manufactured.

(e) Manufacturing sequence of unit cell

The expandable metal Inconel was immersed in the Cu-Zn paste and the Pd-Zn paste to be impregnated with Cu-Zn and Pd-Zn. Next, the expandable metal Inconel thus impregnated was subjected to a dry treatment and a debinder treatment in the atmosphere at 500°C. Hence, a porous metal was manufactured so as to include the supporting catalyst Cu-Zn and Pd-Zn in the expandable metal Inconel. On the porous metal having Cu-Zn and Pd-Zn, the NiO-8YSZ sheet was laid. Furthermore, on the NiO-8YSZ sheet, the 8YSZ sheet was laid, and on the 8YSZ sheet, the LSM sheet was laid. This LSM sheet face was pressurized at 100 g/cm$^2$, whereby adhesiveness among the NiO-8YSZ sheet, the porous metal, the 8YSZ sheet and the LSM sheet was enhanced.

The porous metal on which such three sheets were laid was subjected to the dry treatment and the debinder treatment in the atmosphere at 500°C. Subsequently, the temperature was elevated from 500°C to 1400°C in a flow of N$_2$, and the sheets of the fuel electrode NiO-8YSZ, the electrolyte 8YSZ and the air electrode LSM were sintered together with the porous metal that has Inconel and the supporting catalyst Cu-Zn and Pd-Zn, such that a unit cell was obtained.

**(Tenth Example)**

(a) Porous base material

A porous body (50 mm $\times$ 50 mm $\times$ 2 mm) of 3YSZ, in which a coefficient of thermal expansion was approximate to that of 8YSZ of a solid electrolyte, and strength was also sufficient, was prepared. Moreover, a supporting catalyst employed metal oxide powder having a mean diameter of particles ranging from 1 to 3 $\mu$m and containing Cu-Zn and Pd-Zn. Slurry was prepared so as to include the supporting catalyst, a solvent and a binder. Since the slurry thus prepared was impregnated into the porous body 3YSZ, viscosity of the slurry was set at 100 P (P is poise) or lower.

(b) Fuel electrode material 1

A surface of solid electrolyte substrate (that is, the solid electrolyte substrate corresponds to the below-described solid electrolyte material) was subjected to electric beam evaporation with Ni (evaporation area is 48 mm $\times$ 48 mm and evaporated film thickness is approximately 1 $\mu$m).

(c) Fuel electrode material 2

Powder was obtained by mixing 8YSZ having a mean diameter of particles ranging from 0.3 to 1 $\mu$m with NiO having a mean diameter of particles ranging from 1 to 2 $\mu$m in a weight ratio of 4: 6. Then, the powder was added to a solvent and a binder, and thus a green sheet (48 mm $\times$ 48 mm $\times$ 0.5 mm) was manufactured.

(d) Solid electrolyte material

8YSZ powder having a mean diameter of particles ranging from 0.3 to 1 $\mu$m was added to a solvent and a binder, and thus a green sheet (50 mm $\times$ 50 mm $\times$ 0.2 mm) was manufactured.

(e) Air electrode material

LSM powder having a mean diameter of particles ranging from 1 to 3 $\mu$m was added to a solvent and a binder, and thus a green sheet (45 mm $\times$ 45 mm $\times$ 0.5 mm) was manufactured.

(f) Manufacturing sequence of unit cell

The LSM paste was painted on a painted area (48 mm $\times$ 48 mm) on the green sheet of the solid electrolyte 8YSZ by using the screen printing process. Next, the solid electrolyte thus painted was subjected to a dry treatment and a debinder treatment in the atmosphere at 500°C. Subsequently, the temperature was elevated from 500°C to 1400°C, and the 8YSZ and the LSM were co-sintered. A film thickness of the LSM was approximately 15 $\mu$m, and a plate thickness of the 8YSZ was approximately 150 $\mu$m.

In the LSM-added 8YSZ plate previously obtained, on an 8YSZ face opposite to the LSM face, a Ni film was generated by use of the electric beam evaporation. A film thickness of Ni was approximately 0.5 $\mu$m. An evaporation area having an area of 48 mm $\times$ 48 mm was provided on an 8YSZ base plate having an area of 50 mm $\times$ 50 mm.

On the 3YSZ porous body having the supporting catalyst Cu-Zn and Pd-Zn, the NiO-8YSZ sheet was laid. Furthermore, on the NiO-8YSZ sheet, the 8YSZ sheet was laid so that the Ni-formed face of the 8YSZ sheet previously obtained by the sintering could be brought into contact with the NiO-8YSZ sheet. The LSM sheet face was pressurized at 100 g/cm$^2$, whereby adhesiveness among the LSM, the 8YSZ, the Ni, the NiO-8YSZ sheet and the 3YSZ including Cu-Zn and Pd-Zn was enhanced. Next, the obtained substance was subjected to the dry treatment and the debinder treatment in the atmosphere at 500°C. Subsequently, the temperature was elevated from 500°C to 1400°C in a flow of N$_2$, and the sheets of the air electrode LSM, the solid electrolyte 8YSZ, the fuel electrode Ni and NiO-8YSZ were sintered together with the porous body 3YSZ including the supporting catalyst Cu-Zn and Pd-Zn, thereby obtaining a unit cell.

As above, description has been made in detail for the present invention by giving examples. However, the present invention is not limited to these examples, and various modifications are enabled within the scope of the gist of the present invention.

For example, the shape of the SOFC and so on can be arbitrarily selected, and the SOFC can be manufactured according to target output power of the SOFC. Further, the fuel electrode and the air electrode can be switched in arrangement in accordance with a type of flowing gas (hydrogen, air and the like). Also, other than the method of utilizing the green sheet as described above, various film generating methods can be employed, which include the PVD (Physical Vapor Deposition) process, the CVD (Chemical Vapor Deposition) process, the spraying process, the screen printing process, the spray coating process, the plating process, the electrophoresis process, the sol-gel process and the like, whereby the respective electrodes and solid electrolytes can be covered. Moreover, even in a unit cell containing a material of the fuel electrode in the porous base material, the fuel electrode can be provided between the porous base material and the solid electrolyte.

As described above, in the present invention, the porous base material has the fine pores as gas passages and is able to reform the fuel gas by the plurality of reforming reactions. Such porous base material was used in the unit cell. Therefore, the exothermic heat caused by the reforming reactions can be prevented, and the carbon deposition can be restricted. Accordingly, it is possible to provide the unit cell for the fuel cell, the cell plate for the fuel cell, the stack for the fuel cell and the SOFC, which are more compact and lightweight than the conventional ones.

The present disclosure relates to subject matters contained in Japanese Patent Application No. 2001-326473, filed on October 24, 2001, the disclosure of which is expressly incorporated herein by reference in its entirety.

While the preferred embodiments of the present invention have been described using specific terms, such description is for illustrative purposes. It is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention as defined in the following claims.

**Claims**

1. A unit cell for a fuel cell, comprising:

   a fuel electrode (3);
   an air electrode (1) opposite to the fuel electrode (3);
   a solid electrolyte (2) between the fuel electrode (3) and the air electrode (1); and
a porous base material (4) laminated on the fuel electrode (3),

   wherein the porous base material (4) comprises a plurality of fine pores (5) through which fuel gas flows and has a catalysis by which the fuel gas is reformed.

2. The unit cell according to claim 1,
   wherein the porous base material (4) is an electric conductor (7) and collects an output electric power of the unit cell.

3. The unit cell according to claim 2,
   wherein the electric conductor (7) has one or more metals selected from the group consisting of a copper, a copper-zinc, a palladium, a palladium-zinc, a platinum, a ruthenium, a rhodium, a nickel, a nickel-chromium, a nickel-chromium-iron, a nickel-chromium-tungsten-molybdenum, a nickel-cobalt, a nickel-copper, a silver, a silver-palladium, a silver-platinum, an iron-chromium-nickel and an iron-chromium-aluminum.

4. The unit cell according to claim 1,
   wherein the porous base material (4) is a ceramics.

5. The unit cell according to claim 4,
   wherein the ceramics comprises a electrically conductive material and collects an output electric power of the unit cell.

6. The unit cell according to any of claims 1 through 5,
   wherein the porous base material (4) is formed by supporting, painting or covering one or more reforming catalyst (6) selected from the group consisting of a steam-reforming catalyst, a directly dissolving catalyst and a partially oxidizing catalyst.

7. The unit cell according to claim 1,
   wherein the porous base material (4) has a material included in the fuel electrode (3).

8. The unit cell according to any of claims 1 through 7,
   wherein the fuel electrode (3) is a laminated body formed by laminating a plurality of fuel-electrode layers.

9. A cell plate for a fuel cell, comprising unit cells,
   each of the unit cells comprising:

   a fuel electrode (3);
   an air electrode (1) opposite to the fuel electrode (3);
   a solid electrolyte (2) between the fuel electrode (3) and the air electrode (1); and

a porous base material (4) laminated on the fuel electrode (3), the porous base material (4) comprising a plurality of fine pores (5) through which fuel gas flows and having a catalysis by which the fuel gas is reformed,

wherein the cell plate is formed by arranging the unit cells in a direction substantially perpendicular to a direction where the fuel electrode (3), the solid electrolyte (2) and the air electrode (1) are laminated.

10. A stack for a fuel cell, comprising unit cells, each of the unit cells comprising:

a fuel electrode (3);
an air electrode (1) opposite to the fuel electrode (3);
a solid electrolyte (2) between the fuel electrode (3) and the air electrode (1); and
a porous base material (4) laminated on the fuel electrode (3), the porous base material (4) comprising a plurality of fine pores (5) through which fuel gas flows and having a catalysis by which the fuel gas is reformed,

wherein the stack is formed by integrating and arranging the unit cells in a direction substantially same as a direction where the air electrode (1), the fuel electrode (3) and the solid electrolyte (2) are laminated.

11. A solid oxide fuel cell comprising a stack, the stack comprising unit cells, each of the unit cells comprising:

a fuel electrode (3);
an air electrode (1) opposite to the fuel electrode (3);
a solid electrolyte (2) between the fuel electrode (3) and the air electrode (1); and
a porous base material (4) laminated on the fuel electrode (3), the porous base material (4) comprising a plurality of fine pores (5) through which fuel gas flows and having a catalysis by which the fuel gas is reformed,

the stack being formed by integrating and arranging the unit cells in a direction substantially same as a direction where the air electrode (1), the fuel electrode (3) and the solid electrolyte (2) are laminated, wherein the stack is a power generating element.

# FIG.1
## PRIOR ART

103B
103A } 103

102

101

# FIG.2

1

2

3

4

5

# FIG.3

# FIG.4

## FIG.5

## FIG.6